# EUROPÄISCHE PATENTANMELDUNG

(11) **EP 2 434 432 A1**
(43) Veröffentlichungstag der Anmeldung: **28.03.2012**
(21) Anmeldenummer: 11172768.1
(22) Anmeldetag: 05.07.2011
(51) Int. Cl.: G06K 9/20

(54) **Regelung der Belechtungsintensität für einen optoelektronischen Sensor**

(30) Priorität: 23.09.2010 DE 102010037744
(71) Anmelder: SICK AG, 79183 Waldkirch (DE)
(72) Erfinder: Hammes, Markus, 79104 Freiburg (DE); Braune, Ingolf, 79194 Gundelfingen (DE); Schmitz, Stephan, 79108 Freiburg (DE); MacNamara, Shane, 79285 Ebringen (DE)
(74) Vertreter: Hehl, Ulrich

(57) **Zusammenfassung**

Es wird ein optoelektronischer Sensor (10) zur Überwachung eines Arbeitsbereichs (42) angegeben, der innerhalb eines Erfassungsbereichs (20) des Sensors (10) und in einem ersten Abstand zu dem Sensor (10) angeordnet ist, wobei der Sensor (10) eine Beleuchtungseinheit (22) mit einer Lichtquelle (24), um den Arbeitbereich (42) zumindest teilweise zu beleuchten sowie eine Objekterkennungseinheit (30) aufweist, mittels derer unzulässige Objekte in dem Arbeitsbereich (42) detektierbar sind. Eine Beleuchtungssteuerung (28) ist dafür ausgebildet, in einer Einschaltphase
- die Beleuchtungseinheit (28) zunächst mit einer geringeren Leistung zu aktivieren, so dass ein vorläufiger Arbeitsbereich (40, 40a-c) in einem zweiten Abstand zu dem Sensor (10) kleiner dem ersten Abstand mit höchstens einer vorgegebenen Maximallichtleistung beleuchtet wird,
- zu prüfen, ob in den vorläufigen Arbeitsbereich (40, 40a-c) ein unzulässiger Objekteingriff erfolgt und
- falls kein unzulässiger Objekteingriff erkannt wird, die Beleuchtungseinheit (22) mit einer höheren Leistung zu aktivieren, so dass der Arbeitsbereich (42) mit höchstens der vorgegebenen Maximalleistung beleuchtet wird.

Die Beleuchtungssteuerung (28) weist eine Nahbereichsobjekterkennungseinheit auf, welche dafür ausgebildet ist, den vorläufigen Arbeitsbereich (40, 40a-c) auf eine andere Weise zu prüfen, als die Objekterkennungseinheit (30) den Arbeitsbereich (42).

## Beschreibung

Die Erfindung betrifft einen optoelektronischen Sensor und ein Verfahren zur Überwachung eines Arbeitsbereichs nach dem Oberbegriff von Anspruch 1 beziehungsweise 11.

Zahlreiche optoelektronische Sensoren verwenden eine eigene Laserbeleuchtung, und deren Anteil nimmt noch zu, weil moderne Halbleiterlaser viele geeignete Eigenschaften mitbringen, wie hohen Wirkungsgrad, gute spektrale Abgrenzung und hohe Verfügbarkeit und zugleich einem starken Preisverfall unterliegen. Wegen der Augenschutzanforderungen können aber Laserbeleuchtungen entweder nur mit starken Einschränkungen der optischen Ausgangsleistung betrieben werden, oder sie müssen nach Lasernorm in höhere Schutzklassen, beispielsweise oberhalb der Klasse 1 M in 3R, 3B oder 4 gemäß EN 60825 eingestuft werden. Die strengen Auflagen an den Betrieb der Einrichtung bei höheren Schutzklassen sind meist nicht akzeptabel.

Eine besondere Klasse von Sensoren bilden die entfernungsmessenden optoelektronischen Sensoren. Sie erzeugen Tiefeninformationen über ihren Sichtbereich, messen demnach letztlich die Entfernung zu Objekten. Dafür sind verschiedene Technologien bekannt. Eine Anzahl darunter ist für ihre Sensorfunktion auf eine aktive Beleuchtung angewiesen. Ein entfernungsmessender Laserscanner beispielsweise bestimmt Entfernungen, indem kurze Lichtpulse ausgesandt werden und die Pulslaufzeit bis zum Empfang reflektierten oder remittierten Lichts über die Lichtgeschwindigkeit in Objektabstände umgerechnet wird. Alternativ wird amplitudenmoduliertes Licht anstelle von Lichtpulsen ausgesandt und die Lichtlaufzeit über eine Phasenverschiebung ermittelt. Die aktive Beleuchtung ist hier demnach der Abtaststrahl des Scanners. Lichtlaufzeitkameras werten Laufzeiten ihres Sendelichts sogar in jedem Pixel ihres matrixförmigen Bildsensors aus und erzeugen somit vollständige Tiefenkarten, also dreidimensionale Bilder, deren Tiefendimension die in den einzelnen Pixel bestimmten Abstände oder Entfernungen bildet. Ein bekanntes Verfahren für entsprechende Lichtlaufzeitbildsensoren ist die Photomischdetektion. Ein Scanner ist ebenfalls in der Lage, Tiefenkarten zu erzeugen, muss dazu aber in zwei Dimensionen abgelenkt werden und beispielsweise eine Szene zeilenweise abscannen.

Stereoskopische Kamerasysteme nehmen mehrere zweidimensionale Bilder einer Szenerie aus leicht unterschiedlichen Perspektiven auf. In den überlappenden Bildbereichen werden gleiche Strukturen identifiziert und aus der Disparität und den optischen Parametern des Kamerasystems mittels Triangulation Entfernungen und somit ein dreidimensionales Bild beziehungsweise eine Tiefenkarte berechnet. Stereoskopie kommt prinzipiell als passive Stereoskopie auch ohne eigene Beleuchtung aus. Ist aber die zu überwachende Szenerie kontrastschwach oder weist Bereiche mit wenig Struktur auf, so ist die stereoskopische Auswertung unzuverlässig. Dabei sind zumindest zwei Arten von Fehlern denkbar, nämlich ein Scheitern des Auffindens einander entsprechender Strukturelemente oder eine fehlerhafte Zuordnung. Die Folge sind Lücken in den dreidimensionalen Bildern oder fehlerhafte Berechnungen der Entfernungen.

Aktive Stereomesssysteme verwenden zusätzlich zu dem Empfangssystem, also im Wesentlichen zwei zueinander kalibrierten Kameras, eine Beleuchtungseinheit, deren Funktion ist, die beobachtete Szenerie mit strukturiertem Licht zu beleuchten und so durch die zahlreichen Hell-Dunkel-Übergänge in den Bildern Merkmale zu erzeugen, anhand derer der Stereoalgorithmus zuverlässige und dichte Abstandsdaten aus der Szenerie extrahieren kann. Solche Muster können auch selbstunähnlich sein, also für die vorliegenden Überwachungen in erster Linie keine bezüglich Verschiebungen zueinander symmetrischen Bereiche aufweisen.

Ein besonderes Anwendungsfeld für entfernungsmessende Sensoren ist die Sicherheitstechnik. Eine typische sicherheitstechnische Anwendung ist die Absicherung einer gefährlichen Maschine, wie etwa einer Presse oder eines Roboters, wo bei Eingriff eines Körperteils in einen Gefahrenbereich um die Maschine herum eine Absicherung erfolgt. Dies kann je nach Situation die Abschaltung der Maschine oder das Verbringen in eine sichere Position sein.

Mit Hilfe der Tiefeninformationen können in sicherheitstechnischen Anwendungen Schutzbereiche variabler und genauer festgelegt und mehr und genauere Klassen von erlaubten Objektbewegungen unterschieden werden, also beispielsweise Bewegungen des Roboters selbst oder Vorbeibewegungen eines Körperteils an der gefährlichen Maschine in einer unterschiedlichen Tiefenebene, die an sich völlig ungefährlich ist, aber von einem zweidimensionalen, nicht entfernungsmessenden Sensor wie einer gewöhnlichen Kamera nicht differenziert werden kann.

Sicherheitstechnische Anwendungen bedürfen zuverlässiger Entfernungsdaten, damit kein unzulässiger Eingriff unerkannt bleibt und keinem Eingriff eine falsche Entfernung zugeordnet wird. Ansonsten unterbleibt möglicherweise eine notwendige Abschaltung der Gefährdungsquelle und gefährdet die Gesundheit des Bedienpersonals.

Dazu muss aber die Beleuchtung sehr leistungsfähig sein, um über die gesamte Reichweite genug Lichtleistung zur Verfügung zu stellen. In besonderem Maße gilt dies für aktive Stereoskopiesysteme, in denen auch unter dem Einfluss externer Lichtquellen die Struktur der eigenen Beleuchtung für die Stereokamera sichtbar bleiben muss. Dabei bietet sich prinzipiell der Einsatz leistungsstarker Laser in Kombination mit optischen Bandpassfiltern zur Abgrenzung gegenüber dem Umgebungslicht an. Damit wird auch die fehlende Kontrolle über Untergrundbeschaffenheiten oder die allgemeine Beleuchtungssituation ausgeglichen. Hierzu steht aber die Anforderung für die Akzeptanz derartiger Sensoren in Widerspruch, das von dem Sensor überwachte Gebiet weiterhin allgemein zugänglich zu halten. Üblicherweise wird dabei eine für den Augenschutz unbedenkliche Laserschutzklasse, beispielsweise Typ 1, beziehungsweise 1M gemäß EN 60825 angestrebt. Eine Reduktion der optischen Ausgangsleistung bis unterhalb dieser Grenzwerte stellt aber abhängig von Detektionsvolumina und Umgebungsverhältnissen unter Umständen die gesamte Sensorfunktion in Frage.

Die widersprüchlichen Anforderungen treten besonders deutlich zu Tage, wenn der eigentliche Arbeitsbereich, in dem ein entfernungsmessender Sensor seine Überwachungsaufgabe erfüllen soll, einen gewissen Abstand zu dem Sensor oder selbst eine gewisse Tiefe hat. Dann entsteht zusätzlich zu den globalen Anforderungen an die Laserschutzklasse auch eine ortsabhängige Konkurrenzsituation. Entweder wird die Beleuchtung so dimensioniert, dass im Arbeitsbereich die volle zulässige Lichtleistung, etwa entsprechend Laserschutzklasse 1, verfügbar ist. Da die Lichtleistung pro Fläche mit dem Abstand zu dem Sensor abnimmt, im Falle nicht parallelen Lichts sogar quadratisch, wird dann in der Nähe des Sensors die Laserschutzklasse nicht mehr erfüllt, beziehungsweise nur eine höhere Laserschutzklasse erreicht. Sorgt man umgekehrt schon in unmittelbarer Nähe des Sensors für die Einhaltung einer niedrigen Laserschutzklasse, so wird dadurch die Reichweite des Systems erheblich beschränkt.

In der US 2007-0263903 A1 erzeugt ein stereoskopisches Kamerasystem mittels einer Beleuchtungseinheit ein strukturiertes Beleuchtungsmuster, welches dann verwendet wird, um Entfernungen zu berechnen. Dabei entsteht das Muster, indem ein diffraktives optisches Element mit einem Laser oder einer LED beleuchtet wird. Hierin werden weder eine sicherheitstechnische Anwendung noch Aspekte der Augensicherheit angesprochen.

Eine passive Stereokamera zum Absichern eines Gefahrenbereichs offenbart die EP 1 543 270 A1, wobei eine Szenenanalyse anhand zweier algorithmisch unterschiedlicher Verfahren vorgenommen wird. Naturgemäß geht diese Beschreibung eines passiven Systems in keiner Weise auf besondere Anforderungen einer aktiven Beleuchtung ein.

Ein einfacher Denkansatz zur Auflösung der oben genannten Konkurrenzsituation besteht darin, die hohen Laserschutzklassen in Kauf zu nehmen, einen Laserschutzbeauftragten zu benennen und das System jeweils manuell mit Hilfe einer Anlauftaste nur dann freizugeben, wenn sich keine Person in der Nähe der Lichtquelle befindet. Das erfordert aber einen hohen Zusatzaufwand bei jeder Inbetriebnahme. Außerdem erlaubt die für in der Sicherheitstechnik eingesetzte Sensoren besonders relevante Norm EN 61496 nur Laserschutzklasse 1.

Aus der DE 103 10 768 A1 ist eine Vorrichtung zur Überwachung in drei Dimensionen mit einer Infrarotlaserlichtquelle bekannt, deren Intensität so gesteuert wird, dass sie keine nachteiligen Auswirkungen auf den menschlichen Körper hat.

Die DE 11 2006 000 918 T5 beschreibt ein Laserprojektionssystem mit Mitarbeiterschutz, bei dem in einer Ausführungsform vorgesehen ist, die Leistungsausgabe des Lasers proportional zu dem Abstand zu reduzieren, in dem ein Mitarbeiter durch Umgebungsdetektoren entdeckt wurde.

Bei Personenfahrzeugen ist bekannt, Infrarotscheinwerfer eines Nachtsichtsystems bei Unterschreiten einer Mindestgeschwindigkeit abzuschalten. Oberhalb dieser Geschwindigkeit wird die Lichtleistung als unbedenklich angesehen, weil der Bereich vor dem Fahrzeug dann ohnehin als frei angenommen wird.

Die nachveröffentlichte DE 10 2009 031 732 beschreibt ein Stereoskopiesystem, welches zunächst mit geringer optischer Ausgangsleistung einen vorläufigen Arbeitsbereich prüft. Nur wenn dort keine unzulässigen Objekte erkannt werden, wird auf eine höhere Laserleistung umgeschaltet. Nachteilig hieran ist, dass der Disparitätsbereich eines Stereoalgorithmus' im Nahbereich häufig nicht ausreicht und zudem die Einzelbilder gerade dann übersteuern, wenn ein Objekt vorhanden ist. Somit kann die Objekterkennung im Nahbereich versagen.

Die DE 10 2009 013 735 A1 offenbart einen Sensor für die Überwachung eines Überwachungsbereichs, bei dem der Sensor die auf einem Objekt auftreffende Leistung pro Fläche misst. Bei Detektion eines Objekts wird die Leistung angepasst, um eine Überschreitung eines vorgegebenen Werts zu verhindern. Dies erfordert eine ständige Messung der auftreffenden Strahlungsleistung, die aufwändig und zugleich wegen der Abhängigkeit von nur teilweise bekannten Parametern wie dem Objektabstand und den Remissionseigenschaften des Objekts gemessen werden muss und deshalb entsprechend unzuverlässig ist.

Es ist daher Aufgabe der Erfindung, für einen optoelektronischen Sensor eine zulässige Beleuchtung anzugeben, die eine möglichst hohe Lichtleistung erreicht.

Diese Aufgabe wird durch einen optoelektronischen Sensor gemäß Anspruch 1 und ein Verfahren zur Überwachung eines Arbeitsbereichs gemäß Anspruch 11 gelöst.

Die erfindungsgemäße Lösung geht dabei von dem Grundgedanken aus, dass sich, bedingt durch die optischen Eigenschaften der Lichtquelle und insbesondere deren starke Divergenz, die Anforderungen des Augenschutzes beispielsweise gemäß der Norm EN 60825 mit zunehmendem Abstand wesentlich leichter erfüllen lassen. In der Nähe des Sensors genügt schon eine geringere Lichtleistung, um zu prüfen, ob sich dort ein unzulässiges Objekt befindet. Die Lichtleistung wird anschließend erhöht, um im Arbeitsbereich die volle Erkennungsleistung des Sensors zu erhalten. Eine an sich kritische Lichtleistung in der Nähe des Sensors ist dabei ungefährlich, weil sichergestellt wird, dass sich ohnehin keine Person in diesem Bereich aufhält. Dabei erfolgt die anfängliche Prüfung, ob sich Personen in der Nähe des Sensors aufhalten, auf andere Weise als die Objekterkennung während des späteren Betriebs. Damit wird unterschiedlichen Detektionsleistungen der Objekterkennung in verschiedenen Abständen Rechnung getragen.

Aus Sicht des Schutzes von Bedienpersonal genügt für die erfindungsgemäße Lösung, eine Unterschreitung der Maximallichtleistung sicherzustellen, etwa einer Lichtleistung entsprechend Laserschutzklasse 1. In der Praxis wird bevorzugt zugleich angestrebt, die Maximallichtleistung nach Möglichkeit auch zumindest weitgehend zu erreichen, um die Sensorfunktion optimal zu unterstützen.

Die Erfindung hat den Vorteil, dass der Laserschutz der Beleuchtung in allen Situationen erreicht und automatisch überwacht wird und trotz der somit stets eingehaltenen niedrigen Anforderungen an Augensicherheit, etwa definiert durch Laserschutzklassen, im Arbeitsbereich dennoch die volle zulässige Lichtleistung verfügbar ist. Zusätzliche Sicherheitsmaßnahmen, wie sie beispielsweise höhere Laserschutzklassen erfordern, müssen nicht ergriffen werden.

Selbstverständlich ist je nach Ausführungsform der Abstand zu dem Arbeitsbereich oder dem vorläufigen Arbeitsbereich in einer angepassten Weise zu definieren. Der Abstand kann sich beispielsweise auf einen dem Sensor nächsten Punkt des Arbeitsbereiches, auf die nahe oder ferne Grenzfläche des Arbeitsbereiches, den Schwerpunkt oder ein anderes geometrisches Maß beziehen.

Der Sensor kann jegliche Eingriffe als unzulässig ansehen, aber auch nur solche Eingriffe, die nicht als zulässig eingelernt oder erkannt werden, beispielsweise eine feststehende Werkbank, ein Schrank, die regelmäßige Arbeitsbewegung eines Roboters oder eine durchfahrende Palette.

Die Beleuchtungssteuerung ist bevorzugt dafür ausgebildet, die Beleuchtungseinheit gepulst zu betreiben und deren Leistung über die Leistung einzelner Pulse, die Pulswiederholfrequenz und/oder die Pulslänge zu steuern. Damit kann die Leistung besser gebündelt werden, möglicherweise synchron zu Empfangszeitfenstern. Die mittlere optische Ausgangsleistung lässt sich über die Pulsfolgen besonders einfach steuern, da auf eine aufwändige optische Rückkopplung verzichtet werden kann, indem die Ausgangsleistung über das Zeitverhalten der Pulse verändert wird.

Die Nahbereichsobjekterkennungseinheit weist bevorzugt einen zusätzlichen Nahbereichsdetektor auf. Dieser allein oder in Kombination mit einer Auswertung von Daten des primären Sensor führt dann zu einer besonders zuverlässigen Nahbereichsdetektion.

Die Nahbereichsobjekterkennungseinheit ist bevorzugt dafür ausgebildet, unzulässige Objekte anhand der Übersteuerung eines Lichtempfängers des Sensors zu erkennen. Ein nahes Objekt erzeugt bei bildgebenden Sensoren eine Übersteuerung in benachbarten Pixelgruppen, meist sogar großflächig und in hohem Maße. Dies ist sehr leicht erkennbar und zugleich ein sehr zuverlässiges Erkennungszeichen.

Der Sensor ist bevorzugt als entfernungsmessender optoelektronischer Sensor ausgebildet, insbesondere als stereoskopische 3D-Kamera, als dreidimensionale Lichtlaufzeitkamera oder als Laserscanner. Alle diese Sensoren sind besonders empfindlich für einen entfernungsabhängigen Leistungsabfall.

Vorzugsweise ist der Sensor als stereoskopische 3D-Kamera mit mindestens zwei Bildsensoren und einer Stereoskopieauswertungseinheit für die Erzeugung einer Tiefenkarte aus Bildern der Bildsensoren ausgebildet, wobei die Nahbereichsobjekterkennungseinheit dafür ausgebildet ist, unzulässige Objekte anhand von Fehlstellen in der Tiefenkarte, die mehr als eine Höchstzahl von Pixeln betreffen, oder von Unterschieden zwischen den jeweils gleichzeitig aufgenommenen Bildern der beiden Bildsensoren zu erkennen, die mehr als eine Höchstzahl von Pixeln betreffen. Die Objektdetektion mittels Stereoskopie im Nahbereich erfordert zumindest sehr große Korrelationsfenster und damit besonders hohen Rechenaufwand. Selbst mit diesem Aufwand werden oft keine guten Tiefenschätzungen erzielt. Stattdessen wird deshalb als schnelleres und zuverlässigeres Vorgehen eine Schwelle für die Größe einzelner Bildbereiche oder Bildbereiche in ihrer Gesamtheit gesetzt, in denen kein Tiefenwert geschätzt werden kann oder in denen sich die beiden Bilder unterscheiden. Diese Schwelle orientiert sich daran, wie viele derartige Pixel es im normalen Arbeitsbetrieb geben würde. Gro-βe Lücken treten bei guter Ausleuchtung und leistungsfähigen Stereoalgorithmen in den Tiefenkarten nur auf, wenn Objekte dem Sensor zu nahe kommen. Ebenso sind zwei gleichzeitig aufgenommene Bilder einander sehr ähnlich, wenn sie sich nicht in großer Nähe befinden, so dass der Basisabstand der beiden Bildsensoren der Stereoskopieeinheit einen größeren Einfluss bekommt.

Besonders sicher wird die Nahbereichsdetektion dann, wenn mehrere der Verfahren miteinander kombiniert werden. Durch die redundante Information aus Übersteuerung, Lücken in der Tiefenkarte und großflächigen Unterschieden zwischen rechtem und linkem Bild lässt sich eine sehr zuverlässige Entscheidung treffen.

Die Beleuchtungssteuerung ist bevorzugt dafür ausgebildet, die Beleuchtungseinheit abzuschalten oder die Einschaltphase erneut zu beginnen, falls ein unzulässiger Objekteingriff in den vorläufigen Arbeitsbereich erfolgt. Solche Eingriffe erfolgen zu nahe an der Beleuchtungseinheit, wo im Betrieb die Einhaltung der Grenze der Maximallichtleistung nicht garantiert ist. Der Sensor schaltet dann sofort die Beleuchtung aus, um das Bedienpersonal und vor allem dessen Augen zu schützen. Alternativ wird die Einschaltphase erneut begonnen, dabei also die Lichtleistung auf einen auch in der Nähe des Sensors ungefährlichen Wert zurückgenommen. In diesem zweiten Modus versucht der Sensor so lange die Einschaltphase zu durchlaufen, bis der unzulässige Eingriff endet und Betriebsbereitschaft erreicht werden kann.

Die Beleuchtungssteuerung ist weiterhin bevorzugt dafür ausgebildet, den zweiten Abstand in der Einschaltphase in Abstandsschritten an den ersten Abstand heranzuführen und bei Veränderung des zweiten Abstands die Beleuchtungseinheit mit einer höheren Leistung zu aktivieren, so dass der jeweilige vorläufige Arbeitsbereich in dem veränderten zweiten Abstand mit höchstens der vorgegebenen Maximalleistung beleuchtet wird. Der mit für die volle Sensorfunktion ausreichend Lichtleistung beleuchtete vorläufige Arbeitsbereich entfernt sich dabei sukzessiv von dem Sensor oder wird sukzessiv immer weiter ausgedehnt, bis der eigentliche Arbeitsbereich erreicht ist. So bleibt stets der Ausgleich zwischen Einhaltung von Laserschutzbedingungen und optimaler Ausleuchtung gewahrt.

Die Abstandsschritte sind bevorzugt so klein, dass der vorläufige Arbeitsbereich das Intervall zwischen dem ursprünglichen zweiten Abstand und dem ersten Abstand praktisch kontinuierlich durchläuft, oder die Abstandsschritte entsprechen einer Tiefenausdehnung des Arbeitsbereichs. Entweder wird also der zweite Abstand kontinuierlich oder quasikontinuierlich vergrößert, bis er dem ersten Abstand entspricht, oder die Abstandsschritte sind durch eine Dicke des Arbeitsbereichs gegeben, also dessen Ausdehnung in Tiefenrichtung, und vorläufige Arbeitsbereiche werden diskret und blockweise zunächst nahe an den Sensor bis hin zu dem eigentlichen Arbeitsbereich verschoben.

Die höhere Leistung ist vorteilhafterweise von der Beleuchtungssteuerung in Abhängigkeit des ersten Abstands oder des Verhältnisses von erstem Abstand zu zweitem Abstand festlegbar. Anhand der geometrischen Gegebenheiten lässt sich auf dieser Basis berechnen, welche Leistungserhöhung dazu führt, dass der vorläufige Arbeitsbereich und nach Beendigung der Einschaltphase der Arbeitsbereich mit maximaler, aber zugleich zulässiger Lichtleistung beleuchtet wird.

In bevorzugter Weiterbildung ist eine Abschalteinrichtung vorgesehen, welche dafür ausgebildet ist, in einer sich an die Einschaltphase anschließenden Betriebsphase mit Hilfe der Objekterkennungseinheit unzulässige Objekteingriffe in den Arbeitsbereich zu erkennen und ein Abschaltsignal auszugeben, falls ein unzulässiger Objekteingriff erfolgt. Die nach der Einschaltphase in dem Arbeitsbereich vorhandene leistungsstarke Ausleuchtung kommt sicherheitstechnischen Anwendungen besonders zugute, bei denen Erkennungsfehler die Gesundheit von Personen gefährden würden. Eine besondere Art von unzulässigem Eingriff ist, wenn sich eine Person innerhalb des Arbeitsbereichs zu nahe an den Sensor heranbewegt, beispielsweise bei in Vogelperspektive montiertem Sensor eine Steighilfe verwendet. Alternativ umfasst der Arbeitsbereich auch den Zwischenbereich zwischen der zu überwachenden Gefahrenzone und dem Sensor, wobei dann natürlich ein größerer Raum auf Objekte auszuwerten ist. Jedenfalls wird die Beleuchtung ausgeschaltet, bevor ein Eindringen in einen Bereich mit zu hoher Lichtleistung möglich ist. Ohne Beleuchtung muss zusätzlich auch ein Abschaltsignal an eine überwachte Gefahrenquelle ausgegeben werden, da der Sensor seine Überwachungsaufgabe nicht mehr erfüllt.

Die Beleuchtungseinheit weist bevorzugt eine Laserlichtquelle und ein Mustererzeugungselement zur Erzeugung eines strukturierten Beleuchtungsmusters in dem vorläufigen Arbeitsbereich oder dem Arbeitsbereich auf. Laserlichtquellen sind besonders lichtstark und ihre Kohärenzeigenschaften lassen sich nutzen, um mit hohem Wirkungsgrad Strukturmuster auszubilden. Auch bei alternativen Lichtquellen, wie beispielsweise LEDs, ist eine die Augen potentiell schädigende Ausgangsleistung möglich und daher die Erfindung einsetzbar, um Schutzvorschriften beispielsweise gemäß der hier relevanten Norm DIN 62471 zu erfüllen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Darstellung einer Ausführungsform der Erfindung als Stereoskopiekamera, die einen Roboterarm von oben überwacht;
- Fig. 2: ein Ablaufdiagramm der Einschaltphase und der Betriebsphase eines erfindungsgemäßen Sensors;
- Fig. 3: eine schematische Darstellung zur weiteren Erläuterung der Einschaltphase in einer ersten Ausführungsform; und
- Fig. 4: eine schematische Darstellung gemäß Fig. 3 zur weiteren Erläuterung der Einschaltphase in einer anderen Ausführungsform
- Fig. 5a: eine zeitabhängige Darstellung der optischen Ausgangsleistung bei reduzierter Pulswiederholfrequenz in der Einschaltphase;
- Fig. 5b: eine schematische Darstellung des augensicheren Bereichs bei einer Beleuchtung gemäß Figur 5a;
- Fig. 5c: eine Darstellung analog Figur 5a in der Betriebsphase bei erhöhter Pulsfrequenz;
- Fig. 5d: eine schematische Darstellung des augensicheren Bereichs bei einer Beleuchtung gemäß Figur 5c;
- Fig. 6a-d: Darstellungen analog den Figuren 5a-d bei Variation der Pulsleistung; und
- Fig. 7: ein Blockdiagramm zur Erläuterung des Ablaufs von Einschalt- und Betriebsphase in einer weiteren Ausführungsform der Erfindung.

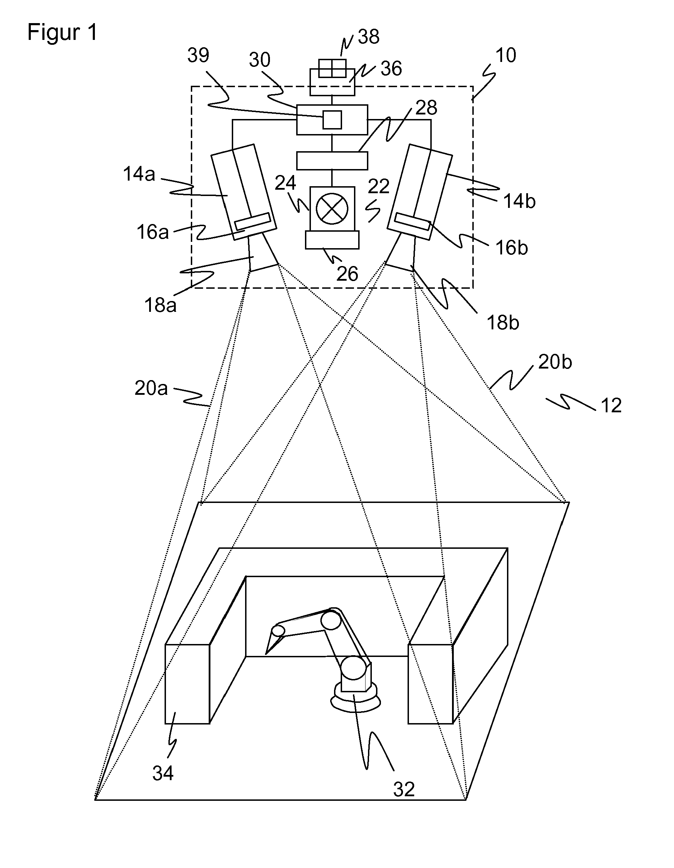

Figur 1 zeigt in einer schematischen dreidimensionalen Darstellung den allgemeinen Aufbau eines erfindungsgemäßen entfernungsmessenden Sensors 10 nach dem Stereoskopieprinzip, der zur sicherheitstechnischen Überwachung eines Raumbereichs 12 eingesetzt ist. Der Sensor 10 ist in dieser Ausführungsform als stereoskopische Sicherheitskamera ausgebildet. Die Erfindung ist aber unabhängig von der Art, mit der dreidimensionale Bilddaten gewonnen werden, und umfasst auch andere Sensoren, insbesondere die einleitend genannten Laserscanner und Lichtlaufzeitkameras. Ebenso ist der Einsatz der Erfindung nicht auf die Sicherheitstechnik beschränkt. Mit dieser Vorbemerkung des weiteren Anwendungsbereichs wird im Folgenden nur noch das Beispiel einer stereoskopischen 3D-Sicherheitskamera als Sensor 10 detailliert beschrieben.

Zwei Kameramodule 14a, 14b sind in einem bekannten festen Abstand zueinander montiert und nehmen jeweils Bilder des Raumbereichs 12 auf. In jeder Kamera ist ein Bildsensor 16a, 16b vorgesehen, üblicherweise ein matrixförmiger Aufnahmechip, der ein rechteckiges Pixelbild aufnimmt, beispielsweise ein CCD- oder ein CMOS-Sensor. Den Bildsensoren 16a, 16b ist je ein Objektiv 18a, 18b mit einer abbildenden Optik zugeordnet, welche in der Praxis als jedes bekannte Abbildungsobjektiv realisiert sein können. Der Sichtwinkel dieser Optiken ist in Figur 1 durch gestrichelte Linien dargestellt, die jeweils eine Sichtpyramide 20a, 20b bilden.

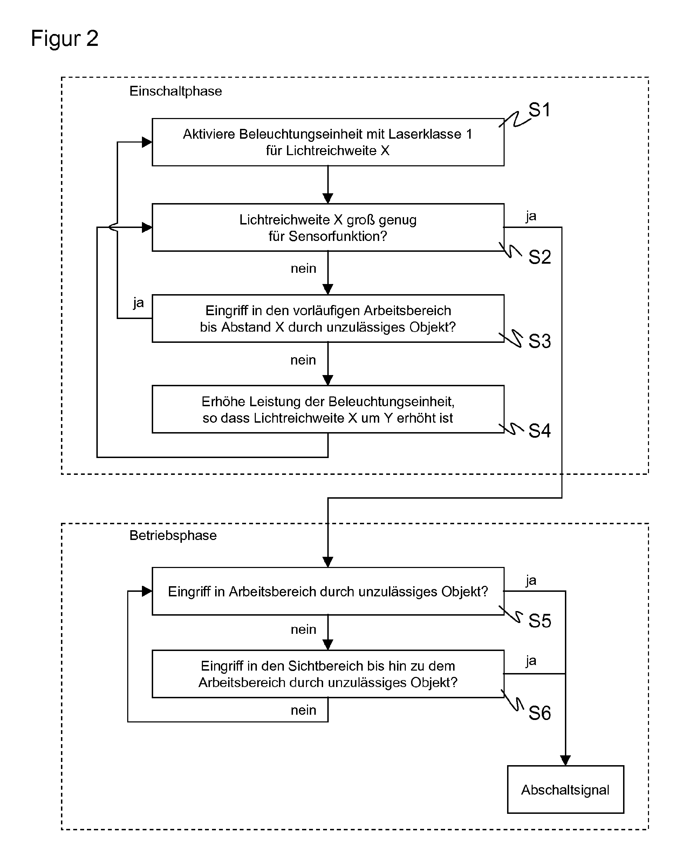

In der Mitte zwischen den beiden Bildsensoren 16a, 16b ist eine Beleuchtungseinheit 22 vorgesehen, wobei diese räumliche Anordnung nur als Beispiel zu verstehen ist und die Beleuchtungseinheit ebenso asymmetrisch oder sogar außerhalb der 3D-Sicherheitskamera 10 angeordnet sein kann. Diese Beleuchtungseinheit 22 weist eine Lichtquelle 24, beispielsweise einen oder mehrere Laser oder LED sowie ein Mustererzeugungselement 26 auf, das beispielsweise als Maske, Phasenplatte oder diffraktives optisches Element ausgebildet ist. Somit ist die Beleuchtungseinheit 22 in der Lage, den Raumbereich 12 mit einem strukturierten Muster auszuleuchten. Eine Beleuchtungssteuerung 28 schaltet die Lichtquelle 24 und bestimmt deren Lichtleistung. Die Arbeitsweise der Beleuchtungssteuerung 28 wird im Zusammenhang mit den Figuren 2 bis 4 weiter unten genauer erläutert.

Mit den beiden Bildsensoren 16a, 16b und der Beleuchtungssteuerung 28 ist eine Steuerung 30 verbunden, welche Bilddaten der Bildsensoren 16a, 16b empfängt und daraus mit Hilfe einer stereoskopischen Disparitätsschätzung dreidimensionale Bilddaten (Entfernungsbild, Tiefenkarte) des Raumbereichs 12 berechnet. Das strukturierte Beleuchtungsmuster sorgt dabei für einen guten Kontrast und eine eindeutig zuordenbare Struktur jedes Bildelements in dem beleuchteten Raumbereich 12.

Im von dem Sicherheitssensor 10 überwachten Raumbereich 12 können sich bekannte und unerwartete Objekte befinden. Dabei kann es sich beispielsweise wie dargestellt um einen Roboterarm 32, aber auch eine sonstige Maschine, eine Bedienperson und anderes handeln. Der Raumbereich 12 bietet Zugang zu einer Gefahrenquelle, sei es weil es ein Zugangsbereich ist oder weil sich eine gefährliche Maschine, wie der Roboterarm 32, in dem Raumbereich 12 selbst befindet. Um diese Gefahrenquelle abzusichern, können ein oder mehrere virtuelle Schutz- und Warnfelder 34 konfiguriert werden. Sie bilden einen virtuellen Zaun um die gefährliche Maschine 32. Aufgrund der dreidimensionalen Auswertung ist es möglich, Schutz- und Warnfelder 34 dreidimensional zu definieren, so dass eine große Flexibilität entsteht.

Die Steuerung 30 wertet die dreidimensionalen Bilddaten auf unzulässige Eingriffe aus. Die Auswertungsregeln können beispielsweise vorschreiben, dass in Schutzfeldern 34 überhaupt kein Objekt vorhanden sein darf. Flexiblere Auswertungsregeln sehen vor, zwischen erlaubten und nicht erlaubten Objekten zu differenzieren, etwa anhand von Bewegungsbahnen, Mustern oder Konturen, Geschwindigkeiten oder allgemeinen Arbeitsabläufen, die sowohl vorab als erlaubt eingelernt als auch anhand von Bewertungen, Heuristiken oder Klassifikationen noch während des Betriebs eingeschätzt werden.

Erkennt die Steuerung 30 einen unzulässigen Eingriff in ein Schutzfeld, so wird über eine Warn- oder Abschalteinrichtung 36, die wiederum in die Steuerung 30 integriert sein kann, eine Warnung ausgegeben oder die Gefahrenquelle abgesichert, beispielsweise der Roboterarm 32 angehalten. Sicherheitsrelevante Signale, also vor allem das Abschaltsignal, werden über einen Sicherheitsausgang 38 ausgegeben (OSSD, Output Signal Switching Device). Dabei hängt es von der Anwendung ab, ob eine Warnung genügt, beziehungsweise es ist eine zweistufige Absicherung vorgesehen, bei der zunächst gewarnt und erst bei fortgesetztem Objekteingriff oder noch tieferem Eindringen abgeschaltet wird. Statt einer Abschaltung kann die angemessene Reaktion auch das sofortige Verbringen in eine ungefährliche Parkposition sein.

Um für sicherheitstechnische Anwendungen geeignet zu sein, ist der Sensor 10 fehlersicher ausgelegt. Dies bedeutet unter anderem, dass der Sensor 10 sich selber, auch in Zyklen unterhalb der geforderten Ansprechzeit, testen kann, insbesondere auch Defekte der Beleuchtungseinheit 22 erkennt und somit sicherstellt, dass das Beleuchtungsmuster in einer erwarteten Mindestintensität verfügbar ist, und dass der Sicherheitsausgang 38 sowie die Warn- oder Abschalteinrichtung 36 sicher, beispielsweise zweikanalig ausgelegt sind. Ebenso ist auch die Steuerung 30 selbstsicher, wertet also zweikanalig aus oder verwendet Algorithmen, die sich selbst prüfen können. Derartige Vorschriften sind für allgemeine berührungslos wirkende Schutzeinrichtungen in der EN 61496-1 bzw. der IEC 61496 sowie in der DIN EN ISO 13849 und EN 61508 normiert. Eine entsprechende Norm für Sicherheitskameras befindet sich in der Vorbereitung.

Erfindungsgemäß ist vor der Betriebsphase, in der die Beleuchtungseinheit 22 einen Arbeitsbereich des Sensors 10 um den Roboterarm 30 mit einer optimalen Lichtleistung beleuchtet, eine Einschaltphase der Beleuchtungseinheit 22 vorgesehen, in welcher die Beleuchtungssteuerung 28 die angestrebte Lichtleistung der Beleuchtungseinheit 22 einstellt. Dabei wird eine Nahbereichsobjekterkennungseinheit 39 in der Steuerung 36 eingesetzt, die sicherstellt, dass sich während der Einschaltphase keine Objekte in der Nähe des Sensors 10 befinden. Der Ablauf von Einschaltphase und Betriebsphase ist in Figur 2 dargestellt.

In einem ersten Schritt S1 aktiviert die Beleuchtungssteuerung 28 die Lichtquelle 24 mit einer vorgegebenen maximalen Lichtleistung, die durch die Anforderungen der Laserschutzklasse 1 oder andere zu erfüllende Sicherheitsbestimmungen für Personen festgelegt ist. Die Lichtleistung genügt, um die Erkennungsfähigkeit des Sensors 10 in einem vorläufigen Arbeitsbereich bis zu einer höchsten Reichweite X zu garantieren. Dabei bedeutet hier Erkennungsfähigkeit nicht unbedingt, dass mittels Stereoskopie weitgehend lückenlose Tiefenkarten berechnet werden können, sondern zunächst nur, dass die Bildsensoren 16a, b ausreichend beleuchtete Einzelbilder gewinnen.

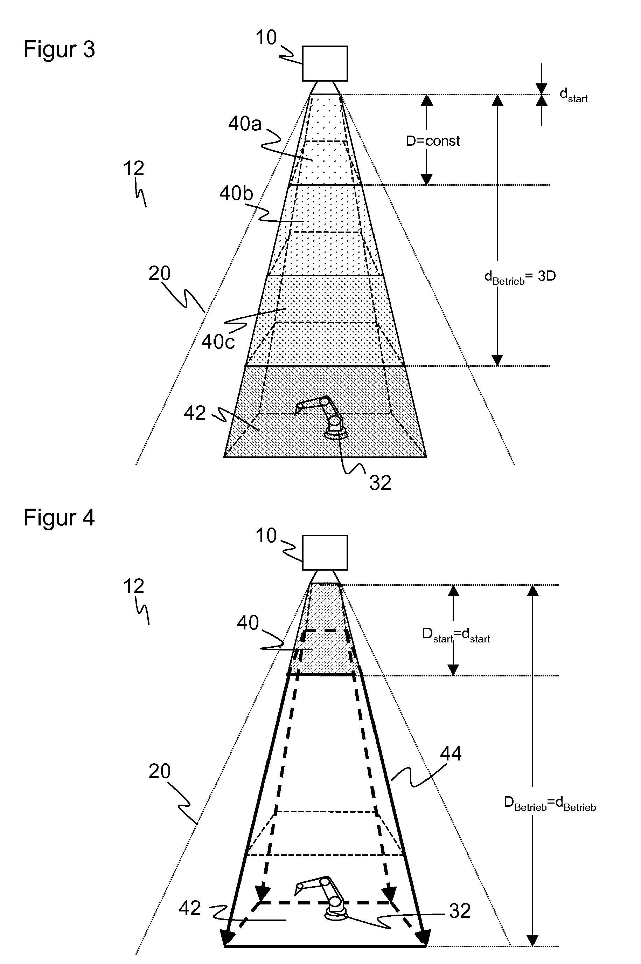

Die verschiedenen Arbeitsbereiche sind in einer Ausführungsform in der Figur 3 illustriert. Dort ist zur besseren Übersicht der Sensor 10 nur als einfache Kamera symbolisiert. Der vorläufige Arbeitsbereich 40a des Schrittes S1 beginnt vor dem Sensor 10 und hat eine Ausdehnung D in Tiefenrichtung. Die anfängliche Reichweite X ist gleich oder größer der Tiefenausdehnung D.

In einem zweiten Schritt S2 wird nun geprüft, ob die Lichtreichweite X für die Sensorfunktion ausreicht. In der Situation der Figur 3 ist das nicht der Fall. Würde die anfängliche Lichtreichweite X bereits für eine hinreichende Ausleuchtung zur Überwachung des Roboterarms 32 sorgen, so kann auf eine Einschaltphase verzichtet werden.

In einem dritten Schritt S3 wird der hinreichend ausgeleuchtete vorläufige Arbeitsbereich 40a auf unzulässige Objekteingriffe geprüft. Es soll sich beispielsweise keine Person nahe dem Sensor 10 befinden. Wird ein unzulässiger Objekteingriff erkannt, so beginnt die Einschaltphase im ersten Schritt S1 von neuem. Dabei wird, sofern die Lichtleistung innerhalb der Einschaltphase verändert wurde, sofort auf die ursprüngliche Lichtleistung zurückgeschaltet, so dass eine Gefährdung von Personen ausgeschlossen ist. Die Einschaltphase befindet sich so in einer Endlosschleife, bis der unzulässige Eingriff endet. Alternativ kann der Sensor 10 sofort oder nach einigen Schleifen die Einschaltphase als gescheitert anzeigen und weitere Versuche abbrechen, eine Betriebsbereitschaft zu erreichen.

Die Erkennung unzulässiger Objekteingriffe erfolgt in der Nahbereichsobjekterkennungseinheit 39. Die stereoskopisch gewonnene Tiefenkarte wird dabei nur optional und zusätzlich zugrunde gelegt. Problematisch für die Berechnung einer hinreichend dichten Tiefenkarte im Nahbereich ist nämlich die Bildübersteuerung oder der eingeschränkte Disparitätsbereich.

Deshalb werden verschiedene Kriterien der Einzelbilder der beiden Bildsensoren 16a, b verwendet, die typischerweise bei Verwendung von Infrarotlicht als Grauwertbilder vorliegen. Die Annäherung von Objekten unmittelbar vor die Beleuchtungseinheit 22 wird zum Beispiel sehr sicher zu großflächiger Übersteuerung in den Aufnahmen führen. Zur Abschätzung der Übersteuerung sind etwa bei einem kritischen Abstand von 20 cm und einer Maximalreichweite von 450 cm sowie den bekannten Schwankungen in dem Remissionsverhalten zwischen heller Haut und dunklem Untergrund 1500-fach höhere Grauwerte zu erwarten. Dieses Kriterium ist besonders einfach auszuwerten und zugleich sehr zuverlässig.

Ein anderes Kriterium bilden markante Unterschiede zwischen den Einzelbildern, etwa große Strukturen in völlig unterschiedlichen Bildbereichen. Das ist im üblichen Stereobetrieb, in dem die beiden Bilder dieselbe Szenerie aus nur leicht versetzter Perspektive aufnehmen, nicht zu erwarten und tritt nur bei sehr nahen Objekten auf. Ein drittes denkbares Kriterium basiert auf dem Versuch, eine Tiefenkarte ohne erweiterte Disparitätsbereiche zu erstellen. Diese wird dann großflächige Lücken aufweisen, weil für sehr nahe Objekte in dem üblichen Korrelationsfenster keine Korrespondenzen gefunden werden. Schließlich ist noch denkbar, einen zusätzlichen, in Figur 1 nicht dargestellten Nahbereichsdetektor zu verwenden. In Mischformen können auch mehrere der genannten Kriterien verwendet werden.

Wenn der vorläufige Arbeitsbereich 40a frei von unzulässigen Objekteingriffen und damit potentiell gefährdeten Personen ist, erhöht die Beleuchtungssteuerung 28 in einem vierten Schritt S4 die Leistung der Lichtquelle 22 und damit die Lichtreichweite X um einen Betrag Y. Der vorläufige Arbeitsbereich 40a wird weiter in Richtung auf den zu überwachenden Roboterarm 32 verschoben, so dass der neue vorläufige Arbeitsbereich 40b einen größeren Abstand zu dem Sensor 10 aufweist als der ursprüngliche vorläufige Arbeitsbereich 40b. Auch der vorläufige Arbeitsbereich 40b hat die konstante Tiefenausdehnung D. Die Erhöhung der Lichtleistung bemisst sich an dem Leistungsverlust pro Fläche durch den größeren Abstand. In manchen Situationen kann die anfängliche Lichtleistung und damit die anfängliche Lichtreichweite X abweichend von dem dargestellten Ablauf für die ersten Verschiebungen des vorläufigen Arbeitsbereichs 40a-c noch ausreichen.

Mit der erhöhten Lichtleistung wird im Schritt 2 erneut geprüft, ob nun die neue Lichtreichweite X ausreicht, den Roboterarm 32 zu überwachen. Der vorläufige Arbeitsbereich 40b wird, wenn an keiner Stelle unzulässige Objekteingriffe erfolgen, in einer Schleife der Schritte S2 bis S4 analog zu dem beschriebenen ersten Durchgang durch diese Schleife über einen weiteren vorläufigen Arbeitsbereich 40c auf den eigentlichen Arbeitsbereich 42 verschoben. Damit ist im Schritt 2 die Bedingung erfüllt, die Lichtreichweite X genügt für die Ausleuchtung des Arbeitsbereichs 42 mit dem Roboterarm 32, und die Einschaltphase geht in die Betriebsphase über. Je weiter der vorläufige Arbeitsbereich 40b von dem Sensor 10 weg ausgedehnt wird, desto besser eignet sich für die Objektfeststellung die Auswertung der Tiefenkarte anstelle der Nahbereichsobjektfeststellungseinheit 39. Es ist denkbar, dass die Nahbereichsobjektfeststellungseinheit 39 überhaupt nur im ersten Zyklus der Schritte S2 bis S4 zum Einsatz kommt.

In der Betriebsphase überwacht in einem ständig durchlaufenen Zyklus die Steuerung 30 in einem Schritt S5, ob in dem Arbeitsbereich 42 ein unzulässiger Eingriff in einen Schutzbereich 34 erfolgt. Ist das der Fall, so wird ein Abschaltsignal an den Roboterarm 32 ausgegeben.

In dem Zyklus wird außerdem in einem Schritt S6 überprüft, ob der Bereich bis zu dem Arbeitsbereich 42 weiterhin frei von Personen ist. Dies kann auf zweierlei Weisen geschehen: Entweder wird tatsächlich in dem Sichtbereich bis zu dem Arbeitsbereich 42 eine Objekterkennung ausgeführt, werden also letztlich die vorläufigen Arbeitsbereiche 40a-c mit überwacht, oder es wird überwacht, ob sich ein Objekt in den sensornahen Randbereich des Arbeitsbereiches 42 bewegt. Das könnte beispielsweise ein Werker sein, der mit einer Steighilfe den Sensor 10 zu erreichen sucht. Falls eine Person zu nahe an den Sensor 10 herankommt, wird die Beleuchtungseinheit 22 abgeschaltet. Damit ist der Sensor 10 nicht mehr einsatzbereit und erzeugt außerdem ein Abschaltsignal an den Roboterarm 32.

Der eigentliche Arbeitsbereich 42 mit dem zu überwachenden Roboterarm 32 weist ebenfalls die konstante Tiefenausdehnung oder Dicke D auf. Diese Dicke D wird davon vorgegeben, wo für die Betriebsphase Schutzbereiche definierbar sein sollen. Beispielsweise ist bei Montage des Sensors 10 an der Decke nicht erforderlich, eine Höhe ab etwa 2,50 Meter über dem Boden noch zu überwachen, da keine Person diese Höhe erreicht. Sobald eine Person eine Höhe von beispielsweise 2,40 Meter erreicht, wird dies im Schritt S6 als Aufstiegsversuch gewertet und die Beleuchtungseinheit 22 abgeschaltet. Der auf die Tiefenausdehnung D beschränkte Arbeitsbereich 42 ist mit deutlich weniger Aufwand zu überwachen als die gesamte Sichtpyramide. Das gilt besonders für die Stereoskopie, die wegen der großen Disparitäten im Nahbereich sehr rechenaufwändig wird.

Bei einer Einschaltphase gemäß dem Ablaufdiagramm der Figur 2 in einer Ausführungsform gemäß Figur 3 wird der sensornahe Bereich vor dem eigentlichen Arbeitsbereich 42 blockweise und diskret mit vorläufigen Arbeitsbereichen 40a-c mit sukzessive stärkerer Lichtleistung geprüft. Dabei beträgt der Abstand dₛₜₐᵣₜ zu dem vorläufigen Arbeitsbereich 40a zu Beginn Null oder liegt zumindest nahe bei dem Sensor 10. Der Bezug des vorläufigen Arbeitsbereichs 40a ist dabei die sensornahe Grenzfläche des Arbeitsbereichs 40a. Am Ende der Einschaltphase beträgt der Abstand d_{Betrieb} im dargestellten Beispiel drei Dicken D des Arbeitsbereichs 42. Selbstverständlich sind auch Abwandlungen mit anderen Vielfachen und auch Bruchteilen von D denkbar.

In einer alternativen Ausführungsform gemäß Figur 4, die ebenfalls dem Ablaufdiagramm der Figur 2 folgt, wird der anfängliche vorläufige Arbeitsbereich nicht wie in Figur 3 verschoben, sondern aufgezogen und damit vergrößert. Dies wird durch Pfeile 44 dargestellt. In diesem Fall beginnt das Verfahren demnach mit einer Dicke Dₛₜₐᵣₜ des vorläufigen Arbeitsbereichs 40 und einem Abstand dₛₜₐᵣₜ, der im Gegensatz zu der Ausführungsform der Figur 3 auf die sensorferne Grenzfläche des vorläufigen Arbeitsbereichs 40 bezogen ist. Während der Leistungsanpassung in den Schritten S2 und S4 verändern sich Abstand und Tiefenausdehnung des vorläufigen Arbeitsbereichs 40 gleichermaßen, bis im Abstand d_{Betrieb} ein endgültiger Arbeitsbereich der Tiefenausdehnung D_{Betrieb} erreicht ist.

Auch Mischformen der beiden zu Figur 3 und 4 beschriebenen Ausführungsformen sind denkbar, bei denen also der vorläufige Arbeitsbereich 40, 40a-c sowohl verschoben als auch vergrößert oder verkleinert wird. Ebenso können die Anpassungsschritte in Schritt S4 sowohl fein, bis hin zu kontinuierlich oder quasikontinuierlich, als auch grob, beispielsweise in der Größenordnung der Dicke des Arbeitsbereichs 42 sein. Schließlich ist auch denkbar, von Beginn an mit dem vorläufigen Arbeitsbereich einen gewissen Abstand zu dem Sensor 10 einzuhalten, bevorzugt so weit, dass die Reichweite der zulässigen Lichtleistung gerade ausgenutzt wird.

Zusammenfassend wird somit die Lichtquelle 22 in ihrer Leistung, ausgehend von einer zulässigen Leistung, beispielsweise im Bereich der Laserschutzklasse 1, langsam erhöht. Gleichzeitig kontrolliert der Sensor 10, dass der Bereich vor der Lichtquelle 22 frei ist. Effektiv entfernt sich damit der vorläufige Arbeitsbereich 40, 40a-c auf zunehmende Arbeitsabstände von dem Sensor 10, solange bis außer definiert zugelassenen Objekten keine Eingriffe erkannt werden. Die aufwändigen großen Disparitäten im Nahbereich müssen dabei nur anfangs berechnet werden. Es ist auch denkbar, diesen Aufwand weiter durch eine Vorverschiebung zu reduzieren, also schon zu Beginn der Einschaltphase einen gewissen Abstand zu dem Sensor 10 einzuhalten. Ist der vorläufige Arbeitsbereich 40, 40a-c und damit der Bereich vor dem Sensor 10 frei, so wird der Arbeitsbereich verschoben oder vergrößert und die Lichtleistung entsprechend vergrö-βert. Dieses Vorgehen wird schrittweise oder kontinuierlich wiederholt, bis der spezifizierte Arbeitsabstand und das eigentliche Arbeitsvolumen 42 erreicht ist.

Im Betrieb wird die Beleuchtungseinheit 22 abgeschaltet, sobald ein Objekt zu nahe an die Lichtquelle 22 herankommt. Dazu wird der Objektabstand geprüft, um beispielsweise einen Werker zu erkennen, der mit einer Steighilfe zu dem Sensor 10 aufsteigt. Damit wird verhindert, dass Personen in Bereiche zu hoher Lichtleistung eintreten.

Beim Ausschalten des Sensors 10 sind keine Besonderheiten zu beachten, da hier die Lichtquelle 22 mit abgeschaltet wird.

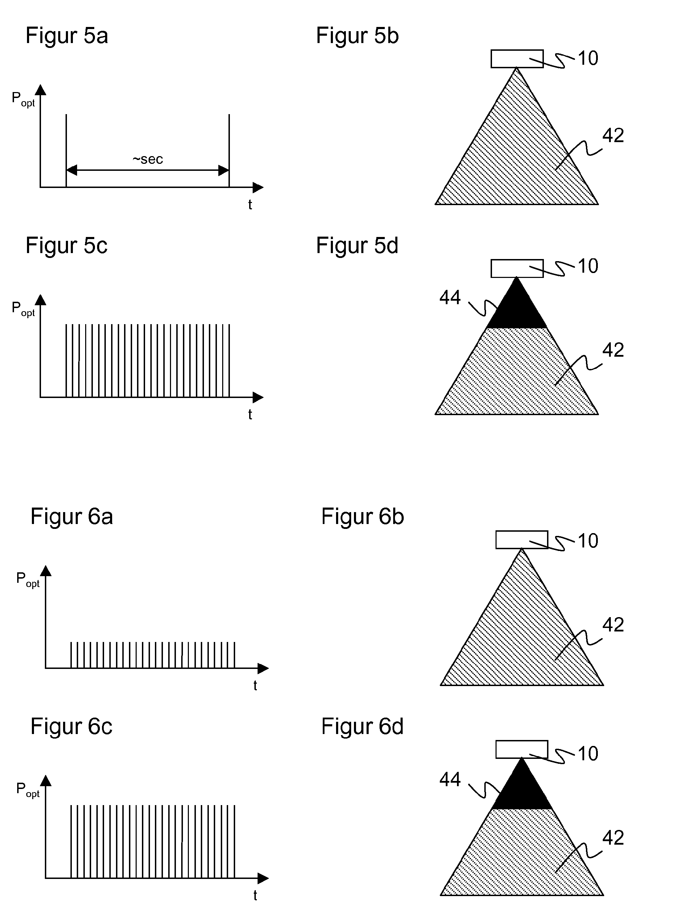

Figur 5 illustriert die Veränderung der optischen Ausgangsleistung der Beleuchtungseinheit 22 und deren Auswirkung auf den augensicheren Bereich. In den Figuren 5a und 5c ist die optische Ausgangsleistung in Abhängigkeit von der Zeit einmal für die Einschaltphase und einmal für die Betriebsphase aufgetragen. Dabei wird in der Einschaltphase die Pulswiederholfrequenz reduziert. Dementsprechend ist die resultierende optische Ausgangsleistung verringert. Die Figuren 5b und 5d zeigen jeweils den augensicheren Beleuchtungsbereich 42 in der Einschaltphase und in der Betriebsphase, also einmal bei einer Ausgangsleistung gemäß den Figuren 5a beziehungsweise 5c. In der Einschaltphase ist der gesamte Bereich augensicher. In der Betriebsphase gibt es zwar einen Bereich 44, in dem die geringe Laserschutzklasse nicht eingehalten wird. Der augensichere Bereich 42 umfasst aber den gesamten Fernbereich, und zugleich ist durch das erfindungsgemäße Vorgehen sichergestellt, dass sich im Nahbereich keine Personen aufhalten.

Die Figuren 6a-d zeigen ganz analog eine alternative Möglichkeit zur Reduktion der optischen Ausgangsleistung, wobei hier die Leistung der einzelnen Pulse anstelle der Pulswiederholfrequenz reduziert wird. Eine weitere Möglichkeit besteht darin, die Pulslängen zu variieren. Dabei sind alle Variationsmöglichkeiten auch abweichend von der Darstellung in unregelmäßiger Weise und miteinander kombiniert einsetzbar. Bevorzugt ist die Veränderung der Pulswiederholfrequenz, weil davon lediglich die Ansprechzeit des Sensors 10, nicht jedoch die energetischen Verhältnisse beeinflusst werden, wie Reichweite oder Bildhelligkeit.

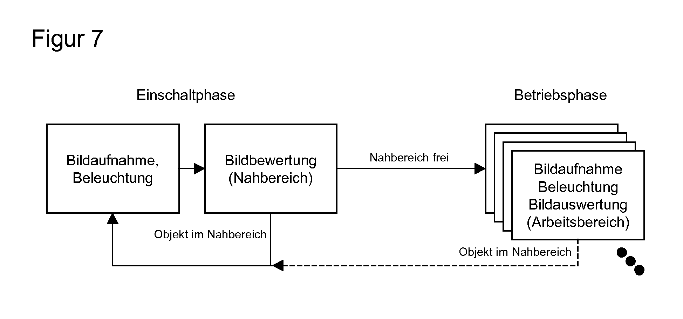

Figur 7 illustriert den erfindungsgemäßen Ablauf in einer weiteren Ausführungsform der Erfindung. In der Einschaltphase wird wie oben beschrieben geprüft, ob der Nahbereich frei von unzulässigen Objekten ist. Diese Prüfung erfolgt in einem Beleuchtungs-/Bildaufnahmemodus, bei dem die Augensicherheit aufgrund gegenüber dem Betrieb geänderter Beleuchtungsparameter in jedem Fall sichergestellt ist.

Nachdem die Annäherung von Objekten an den Sensor (10) durch Bewertung des Nahbereichs ausgeschlossen wurde, wird der Beleuchtungsmodus derart umgestellt, dass die Funktionsanforderungen an die Beleuchtung erfüllt sind, beispielsweise in den Parametern Beleuchtungsstärke, Pulswiederholrate oder Pulsdauer. Auch wenn die Grenzwerte des Augenschutzes im unmittelbaren Nahbereich nicht mehr erfüllt sein sollten, beeinträchtigt das die Klassifikation der Lasereinrichtung nicht, weil die Zugänglichkeit dieses Bereichs ausgeschlossen wurde.

Die Umschaltung zwischen der bedingungslos augensicheren Einschaltphase und der im Fernbereich augensicheren Betriebsphase kann reversibel erfolgen. Bei Eintreten eines Objekts in den Nahbereich wird dann automatisch innerhalb eines oder weniger Beleuchtungszyklen in die Einschaltphase umgeschaltet und diese solange beibehalten, bis der überwachte Nahbereich wieder frei ist. Eine schädliche Exposition des Auges ist dadurch nicht möglich.

Die Erfindung geht von der Grundidee aus, dass die Lasernormen eine Einschränkung der *zugänglichen* Strahlung unterhalb eines Grenzwerts fordern. Deshalb wird in der Einschaltphase sichergestellt, dass der Bereich in der Nähe des Sensors mit höherer Laserexposition frei von Personen ist. Dieses Verfahren funktioniert dann besonders gut, wenn das Lichtfeld eine hohe Divergenz aufweist, bei der eine Gefährdung allenfalls auf kurze Distanz auftritt und durch den starken Leistungsdichteabfall bei wachsendem Abstand die Situation entschärft wird. Die Erfindung ist prinzipiell auch für fahrende Systeme einsetzbar.

## Patentansprüche

1. Optoelektronischer Sensor (10) zur Überwachung eines Arbeitsbereichs (42), der innerhalb eines Erfassungsbereichs (20) des Sensors (10) und in einem ersten Abstand zu dem Sensor (10) angeordnet ist, wobei der Sensor (10) eine Beleuchtungseinheit (22) mit einer Lichtquelle (24), um den Arbeitbereich (42) zumindest teilweise zu beleuchten sowie eine Objekterkennungseinheit (30) aufweist, mittels derer unzulässige Objekte in dem Arbeitsbereich (42) detektierbar sind,
wobei eine Beleuchtungssteuerung (28) der Beleuchtungseinheit (22) dafür ausgebildet ist, in einer Einschaltphase
- die Beleuchtungseinheit (28) zunächst mit einer geringeren Leistung zu aktivieren, so dass ein vorläufiger Arbeitsbereich (40, 40a-c) in einem zweiten Abstand zu dem Sensor (10) kleiner dem ersten Abstand mit höchstens einer vorgegebenen Maximallichtleistung beleuchtet wird,
- zu prüfen, ob in den vorläufigen Arbeitsbereich (40, 40a-c) ein unzulässiger Objekteingriff erfolgt und
- falls kein unzulässiger Objekteingriff erkannt wird, die Beleuchtungseinheit (22) mit einer höheren Leistung zu aktivieren, so dass der Arbeitsbereich (42) mit höchstens der vorgegebenen Maximalleistung beleuchtet wird, **dadurch gekennzeichnet,**
**dass** die Beleuchtungssteuerung (28) eine Nahbereichsobjekterkennungseinheit aufweist, welche dafür ausgebildet ist, den vorläufigen Arbeitsbereich (40, 40a-c) auf eine andere Weise zu prüfen, als die Objekterkennungseinheit (30) den Arbeitsbereich (42).

2. Sensor (10) nach Anspruch 1,
wobei die Beleuchtungssteuerung (28) dafür ausgebildet ist, die Beleuchtungseinheit (28) gepulst zu betreiben und deren Leistung über die Leistung einzelner Pulse, die Pulswiederholfrequenz und/oder die Pulslänge zu steuern.

3. Sensor (10) nach Anspruch 1 oder 2,
wobei die Nahbereichsobjekterkennungseinheit einen zusätzlichen Nahbereichsdetektor aufweist.

4. Sensor (10) nach einem der vorhergehenden Ansprüche,
wobei die Nahbereichsobjekterkennungseinheit dafür ausgebildet ist, unzulässige Objekte anhand der Übersteuerung eines Lichtempfängers des Sensors zu erkennen.

5. Sensor (10) nach einem der vorhergehenden Ansprüche,
der als entfernungsmessender optoelektronischer Sensor, insbesondere als stereoskopische 3D-Kamera, als dreidimensionale Lichtlaufzeitkamera oder als Laserscanner ausgebildet ist.

6. Sensor nach Anspruch 5,
der als stereoskopische 3D-Kamera mit mindestens zwei Bildsensoren und einer Stereoskopieauswertungseinheit für die Erzeugung einer Tiefenkarte aus Bildern der Bildsensoren ausgebildet ist, wobei die Nahbereichsobjekterkennungseinheit dafür ausgebildet ist, unzulässige Objekte anhand von Fehlstellen in der Tiefenkarte, die mehr als eine Höchstzahl von Pixeln betreffen, oder von Unterschieden zwischen den jeweils gleichzeitig aufgenommenen Bildern der beiden Bildsensoren zu erkennen, die mehr als eine Höchstzahl von Pixeln betreffen.

7. Sensor (10) nach einem der vorhergehenden Ansprüche,
wobei die Beleuchtungssteuerung (28) dafür ausgebildet ist, die Beleuchtungseinheit (22) abzuschalten oder die Einschaltphase erneut zu beginnen, falls ein unzulässiger Objekteingriff in den vorläufigen Arbeitsbereich (40, 40a-c) erfolgt.

8. Sensor (10) nach einem der vorhergehenden Ansprüche,
wobei die Beleuchtungssteuerung (28) dafür ausgebildet ist, den zweiten Abstand in der Einschaltphase in Abstandsschritten an den ersten Abstand heranzuführen und bei Veränderung des zweiten Abstands die Beleuchtungseinheit (22) mit einer höheren Leistung zu aktivieren, so dass der jeweilige vorläufige Arbeitsbereich (40, 40a-c) in dem veränderten zweiten Abstand mit höchstens der vorgegebenen Maximalleistung beleuchtet wird, wobei insbesondere die Abstandsschritte so klein sind, dass der vorläufige Arbeitsbereich (40, 40a-c) das Intervall zwischen dem ursprünglichen zweiten Abstand und dem ersten Abstand praktisch kontinuierlich durchläuft, oder die Abstandsschritte einer Tiefenausdehnung des Arbeitsbereichs (42) entsprechen.

9. Sensor (10) nach einem der vorhergehenden Ansprüche,
wobei eine Abschalteinrichtung (36) vorgesehen ist, welche dafür ausgebildet ist, in einer sich an die Einschaltphase anschließenden Betriebsphase mit Hilfe der Objekterkennungseinheit (30) unzulässige Objekteingriffe in den Arbeitsbereich (42) zu erkennen und ein Abschaltsignal auszugeben, falls ein unzulässiger Objekteingriff erfolgt.

10. Sensor (10) nach einem der vorhergehenden Ansprüche,
wobei die Beleuchtungseinheit (22) eine Laserlichtquelle (24) und ein Mustererzeugungselement (26) zur Erzeugung eines strukturierten Beleuchtungsmusters in dem vorläufigen Arbeitsbereich (40, 40a-c) oder dem Arbeitsbereich (42) aufweist.

11. Verfahren zur Überwachung eines Arbeitsbereichs (42), der innerhalb eines Erfassungsbereichs (20) eines optoelektronischen Sensors (10) und in einem ersten Abstand zu dem Sensor (10) angeordnet ist, wobei der Arbeitsbereich (42) zumindest teilweise mittels einer Beleuchtungseinheit (22) beleuchtet wird und wobei in dem Arbeitsbereich (42) in einer Objekterkennung unzulässige Objekte detektiert werden, wobei in einer Einschaltphase
- die Beleuchtungseinheit (22) zunächst mit einer geringeren Leistung aktiviert wird, so dass ein vorläufiger Arbeitsbereich (40, 40a-c) in einem zweiten Abstand zu dem Sensor (10) kleiner dem ersten Abstand mit höchstens einer vorgegebenen Maximallichtleistung beleuchtet wird,
- in einer Nahbereichserkennung geprüft wird, ob in den vorläufigen Arbeitsbereich (40, 40a-c) ein unzulässiger Objekteingriff erfolgt und
- falls kein unzulässiger Objekteingriff erkannt wird, die Beleuchtungseinheit (22) mit einer höheren Leistung aktiviert wird, so dass der Arbeitsbereich (42) mit höchstens der vorgegebenen Maximalleistung beleuchtet wird,
**dadurch gekennzeichnet,**
**dass** die Nahbereichserkennung mit einem anderen Verfahren erfolgt als die Objekterkennung.
